Europäisches Patentamt

European Patent Office

Office européen des brevets

(19)

(11) Publication number: **0 174 265**
A2

(12) **EUROPEAN PATENT APPLICATION**

(21) Application number: **85630143.7**

(22) Date of filing: **03.09.85**

(51) Int. Cl.⁴: **C 08 G 63/26**

(30) Priority: **07.09.84 US 648104**

(43) Date of publication of application:
**12.03.86 Bulletin 86/11**

(84) Designated Contracting States:
**DE FR GB IT**

(71) Applicant: **THE GOODYEAR TIRE & RUBBER COMPANY**
**1144 East Market Street**
**Akron, Ohio 44316(US)**

(72) Inventor: **Smith, Richard Robinson**
**2419 16th Street**
**Cuyahoga Falls Ohio 44223(US)**

(72) Inventor: **Wilson, John Robert**
**11564 Grenada Circle**
**Hartville Ohio 44632(US)**

(74) Representative: **Weyland, Joseph Jean Pierre**
**Goodyear International Tire Technical Center Patent**
**Department Avenue Gordon Smith**
**L-7750 Colmar-Berg(LU)**

(54) **Solid state polymerization process.**

(57) Polyester resins having low oxygen permeability are useful as packaging materials, such as bottles, cans, film wraps, and the like. This invention discloses a process for the synthesis of such polyester resins having low oxygen permeability by a solid state polymerization technique. In this technique a polyethylene terephthalate prepolymer and a polyethylene isophthalate prepolymer are simultaneously solid state polymerized together to yield such a high barrier resin.

## SOLID STATE POLYMERIZATION PROCESS

### Background of the Invention

Containers which are constructed of polyethylene terephthalate (PET) are widely accepted for use in the packaging of food stuffs, beverages, medicines, and other consumer products. PET bottles for carbonated beverages such as soda pop or soft drinks have become particularly popular.

Despite the popularity of PET for use in containers it has several drawbacks. Although PET is considered a high barrier polymer, the use of PET containers for various items such as beer has been avoided due to the rapidity with which beer loses its flavor, due largely to oxygen migration into the bottles. Further, because of the high processing temperatures involved in the manufacture of PET bottles, a significant amount of acetaldehyde by-product is formed during extrusion and molding. This compound, at relatively low concentrations, readily imparts an undesirable or bad after taste to many food stuffs packaged in PET.

### Summary of the Invention

This invention discloses a process for the synthesis of polyester resins having low oxygen permeability. In this process a low molecular weight polyethylene terephthalate prepolymer and a low molecular weight polyethylene isophthalate (PEI) prepolymer are simultaneously solid state polymerized together to yield a high molecular weight polyester resin having low oxygen permeability. Generally, the PET and PEI prepolymers are melt blended before this solid state polymerization process. This high molecular weight resin has a very low concentration of acetaldehyde. The process of this invention offers very substantial economic advantages and improved product quality over the process of blending high molecular weight PET and high molecular weight PEI in the melt at high temperatures. This invention more specifically reveals a process for the preparation of a high molecular weight polyester resin comprising solid state polymerizing a mixture of from about 25 to about 95 mole percent of a polyethylene terephthalate prepolymer and from about 5 to about 75 mole percent of a polyethylene isophthalate prepolymer at an elevated temperature to produce said high molecular weight resin, wherein said high molecular weight resin has an oxygen permeability of 0.8 cc·mil/100 in$^2$·day·atm or less and an intrinsic viscosity of 0.65 dl/g or greater.

Detailed Description of the Invention

The polyethylene terephthalate and polyethylene isophthalate prepolymers utilized in the solid state polymerization technique of this invention can be prepared in a conventional melt polymerization. For example, the polyethylene isophthalate (PEI) can be produced by reacting isophthalic acid or a diester thereof, such as dimethyl isophthalate or diethyl isophthalate, with ethylene glycol in a conventional manner. All of the reactants are commonly added to an esterification or transesterification stage followed by a polycondensation stage to produce the PEI prepolymer. The PET prepolymer can be made in a similar manner.

A preferred technique for making the PEI prepolymer is described in United States Patent 4,424,337 which is incorporated herein by reference in its entirety. United States Patent 4,447,595 which is also incorporated herein by reference in its entirety describes a good method for the preparation of the PET prepolymer.

The PEI and PET prepolymers which are solid state polymerized in accordance with this invention can be copolymers which contain minor amounts of other monomers. For example, the PEI prepolymer can contain small amounts of monomers in addition to ethylene glycol and isophthalic acid or a diester thereof; and the PET prepolymer can contain small amounts of monomers in addition to ethylene glycol and terephthalic acid or a diester thereof. Generally the amount of these other acids and glycols in PEI and PET prepolymers will be no more than 15 mole percent of the number of moles of acids and glycols in the polyester. Thus, at least 85 mole percent of the repeating acid units in PET will be derived from terephthalic acid or a diester thereof and at least 85 mole percent of the glycol repeating units will be derived from ethylene glycol. In most cases the amount of these other acids and other glycols in the PEI and PET prepolymers will represent less than 5 mole percent of the total number of moles of acids and glycols respectively polymerized into them. A terephthalic acid/ethylene glycol/butylene glycol copolymer in which the glycol component is comprised of 99 mole percent ethylene glycol and 1 mole percent butylene glycol can thus be used as the PET prepolymer. In many cases the PET and PEI prepolymers will be homopolymers. In some cases, it may be desirable to solid state polymerize small amounts (up to 15 weight percent) of additional prepolymers, such as polybutylene terephthalate (PBT), with the PET and PEI prepolymers. Various additives, such as stabilizers, nucleating agents, antioxidants, dyes or pigments, and the like can also be present in the prepolymers.

The PET and PEI prepolymers used in the process of this invention generally have an initial I.V.

(intrinsic viscosity) of at least 0.3 dl/g in a 50:50 by weight trifluoroacetic acid:dichloromethane mixture at 30°C and a concentration of 0.4 g/dl. In other words, these prepolymers have an I.V. of at least 0.3 dl/g before being solid state polymerized. Preferably the PET and PEI prepolymers will have an I.V. before the solid state polymerization of from 0.45 to 0.7 dl/g. It is normally more preferred for these prepolymers to have a starting (initial) I.V. of from 0.55 to 0.6 dl/g.

Numerous techniques can be used in order to prepare the mixture of PET prepolymer and PEI prepolymer which is solid state polymerized. For example, they can be blended using either reactor blending or blending with an extruder. In extruder blending, preblended dry chips are usually mixed together. In reactor blending, one of the prepolymers is added to the other at the end of the melt polymerization step. A third procedure involves merging two reaction melt streams together and mixing them. Regardless of which melt blending process is utilized, the temperature of mixing will normally be at a temperature near or above the melting point of the highest melting polyester. The mixing temperature used will vary with the ratio of PEI to PET being melt blended. However, persons skilled in the art will be able to ascertain the optimum temperature for doing the melt blending using standard engineering techniques. In the case of extrusion blending a mixture of 20 weight percent PEI prepolymer with 80 weight percent PET prepolymer an extruder temperature of 260°C to 285°C works very well. If greater amounts of PEI are used in the blend then lower extruder temperatures can be used. For example, a mixture of 60 to 80 weight percent of PEI prepolymer with 20 to 40 weight percent of PET prepolymer can be melt blended at an extruder temperature of 235°C to 250°C.

After the polyester prepolymers are melt blended the mixture of the two prepolymers is solidified and cut, diced, or otherwise reduced to a divided state. Thus, the melt blend of the polyester prepolymers utilized in the solid state polymerizations of this invention will generally be in the form of pellets or chips. Such pellets can vary greatly in size, however, as a general rule, the smaller the size of the pellets of the melt blend of the two prepolymers the faster the solid state polymerization will proceed.

The mixture of the PET and PEI prepolymers is generally converted from the amorphous to the crystalline state prior to being solid state polymerized in order to raise its sticking temperature. This is done in order to keep the pellets or chips of the melt blend of the polyester prepolymers from sticking together as a solid mass in the solid state polymerization reactor. This crystallization can be accomplished by any suitable treatment, such as slowly cooling an extruded or cast melt of the prepolymer blend to room temperature, or a quenched polymer melt in the amorphous state can be crystallized by a controlled heating treatment or by treating the solid polymer with the vapor of a suitable organic solvent.

The melt blend of the PET and PEI prepolymers can be solid state polymerized in a batch or in a continuous process. Suitable solid state polymerization temperatures can range from a temperature just above the threshold temperature of the polymerization reaction up to a temperature within a few degrees of the sticking temperature of the resin which can be well below its melting point. This temperature is usually from about 1°C to about 50°C below the sticking temperature of the mixture of PET and PEI prepolymers. The optimum solid state reaction temperature will differ somewhat with differing ratios of PEI to PET in the prepolymer mixture. As a general rule, the optimum solid state polymerization temperature for a prepolymer blend will be from about 5°C to about 20°C below its sticking temperature. Generally, mixtures of PEI and PET prepolymers will be solid state polymerized at a temperature of from about 200°C to about 235°C. In most cases melt blends of PEI and PET prepolymers will be solid state polymerized at a temperature of from 220°C to 230°C. As the solid state polymerization of a mixture of PET and PEI prepolymers proceeds its sticking temperature can increase. Thus, the solid state polymerization temperature can be incrementally increased during the course of the polymerization.

The solid state polymerization is normally conducted in the presence of a stream of inert gas. The inert gas stream serves to remove volatile reaction products, such as water, glycols, and acetaldehyde, and also helps to heat the polyester. Usually, between about 0.05 and about 2 liters of inert gas per hour will be passed through the mixture of prepolymers per kilogram of the mixture of PET and PEI prepolymers. Some suitable inert gases for use in the solid state polymerization process include nitrogen, carbon dioxide, helium, argon, neon, krypton, xenon, and certain industrial waste gases. Various combinations or mixtures of different inert gases can also be used. In most cases nitrogen will be used as the inert gas. The solid state polymerization can also be conducted in a vacuum instead of doing it in a stream of inert gas.

The mixture of the PET and PEI prepolymers is solid state polymerized for a time sufficient to obtain a high molecular weight resin having an I.V. of at least 0.65 dl/g. In most cases the prepolymer blend will be solid state polymerized to an I.V. of 0.7 dl/g or greater with it being desirable to polymerize the mixture of PEI and PET prepolymers to an I.V. of at least 0.9 dl/g in some cases. The amount of time required for the solid state polymerization will normally be from about 1 hour to about 36 hours. More commonly the solid state polymerization time will range from 8 to 24 hours.

The amount of PEI prepolymer to the total amount of prepolymers being solid state polymerized ranges from about 5 to about 75 mole percent. In most cases there will be from 10 to 65 mole percent PEI prepolymer in the mixtures of PEI and PET prepolymers which are solid state polymerized. However, the polymerization of a mixture of 15 to 25 mole percent of a PEI prepolymer and 75 to 85 mole percent of a PET prepolymer results in a high molecular weight resin having oxygen barrier properties which are improved by about 30 to 50%. This resin also has good mechanical strength and creep resistance and thus has excellent properties for a resin from which bottles for carbonated beverages can be made. The solid state polymerization of a blend of 25 to 55 mole percent of a PEI prepolymer and 45 to 75 mole percent of a PET prepolymer will result in the formation of a high molecular weight resin having oxygen barrier properties which are improved by about 50 to 150%. Such a resin can be used, for example, in non-pressurized containers where very low oxygen permeability is desired, such as wine and ketchup bottles.

The high molecular weight resins which are made in the solid state polymerizations of the present invention generally have an oxygen permeability resistance of 8 cc-mil/100 $in^2$/day-atm or less; desirably no more than 7 cc-mil/100 $in^2$/day-atm; and preferably no more than 6 cc-mil/100 $in^2$/day-atm. The permeability of carbon dioxide is generally 50 cc-mil/100 $in^2$/day-atm or less, desirably no more than 30 cc-mil/100 $in^2$/day-atm; and preferably no more than 20 cc-mil/100 $in^2$/day-atm. These gas permeabilities relate to unoriented pressed films which are made of the high molecular weight resin. The high molecular weight polyester resins of this invention generally have an acetaldehyde content of no more than 6 ppm (parts per million) by weight. It is preferred for these high molecular weight resins to have an acetaldehyde content of no more than 3 ppm.

This invention is illustrated by the following examples which are merely for the purpose of illustration and are not to be regarded as limiting the scope of the invention or manner in which it may be practiced. Unless specifically indicated otherwise, all parts and percentages are given by weight.

### Example 1

About 20 pounds of a PEI prepolymer was melt mixed with about 80 pounds of a PET prepolymer in a Transfermix mixing extruder. This melt blend of the two prepolymers had an initial I.V. of 0.60 dl/g and was added to a 3 cubic foot blender dryer which was heated to 200°C for one hour in order to crystallize it. During this crystallization period the mixture of PET and PEI prepolymers was agitated by rotating the blender dryer. This crystallization was done at atmospheric pressure under a nitrogen atmosphere.

After the crystallization period a vacuum was applied and the temperature was increased to 220°C to start the solid state polymerization of the blend of the PET and PEI prepolymers. The I.V. of the high molecular weight resin being produced was monitored during the course of the solid state polymerization. The I.V. of the solid state resin produced after various polymerization times is shown in Table I.

TABLE I

| Polymerization Time | I.V. (dl/g) |
| --- | --- |
| Initial | 0.60 |
| 4 hours | 0.63 |
| 8 hours | 0.68 |
| 14 hours | 0.77 |
| 20 hours | 0.84 |

The oxygen permeability of the high molecular weight resin produced which had an I.V. of 0.84 dl/g was about 6 cc-mil/100 $in^2$/day-atm. This represents a very substantial improvement over the oxygen permeability of resins made from only PET which generally have an oxygen permeability of about 8 cc-mil/100 $in^2$/day-atm. The high molecular weight resin produced also had an excellent combination of mechanical properties for use as a resin from which bottles for carbonated beverages can be made. Thus, this example shows that the solid state polymerization process of this invention can be used to make high molecular weight resins which have low oxygen permeability and which exhibit mechanical properties that allow them to be used in bottles for carbonated beverages.

Example 2

The procedure utilized in Example 1 was repeated in this experiment except that the starting I.V. was

10

0.69 dl/g and that the maximum polymerization time was increased to 24 hours. The I.V. of the solid stated resin produced after various polymerization times is shown in Table II.

TABLE II

| Polymerization Time | I.V. (dl/g) |
|---|---|
| Initial | 0.69 |
| 4 hours | 0.76 |
| 8 hours | 0.81 |
| 16 hours | 0.98 |
| 24 hours | 1.09 |

This experiment shows that mixtures of PET and PEI prepolymers can be solid state polymerized to an I.V. of greater than 1.0 dl/g.

Example 3

The procedure specified in Example 1 was repeated in this experiment except that the mixture of PET and PEI prepolymers contained 50% PET and 50% PEI. In this experiment the crystallization was done at 170°C with the starting I.V. of the mixture being 0.69 dl/g. The PET/PEI prepolymer was solid state polymerized for a maximum time of 18 hours in this experiment.

The I.V. of the high molecular weight resin produced after various polymerization times is shown in Table III.

## TABLE III

| Polymerization Time | I.V. (dl/g) |
|:---:|:---:|
| Initial | 0.69 |
| 6 hours | 0.82 |
| 10 hours | 0.91 |
| 18 hours | 1.00 |

The oxygen permeability of the high molecular weight resin produced which had an I.V. of 1.00 dl/g was about 4 cc-mil/100 in$^2$/day-atm. Thus, blends of PET and PEI prepolymers can be solid state polymerized into high molecular weight resins having an I.V. of 1.0 dl/g which have very low oxygen permeability.

### Example 4

This comparative example is included in order to demonstrate some of the problems associated with the process of blending high molecular weight PEI with high molecular weight PET in the molten state of high temperatures. In this experiment PET having an I.V. of 0.91 dl/g was melt blended with PEI having an I.V. of 0.86 dl/g in a Transfermix extruder at a temperature in the range of 327°C to 332°C. Melt blends containing 20%, 25%, and 30% PEI were prepared. The intrinsic viscosities of these blends were only in the range of 0.73 to 0.75 dl/g. Thus, the melt blending of these high molecular weight (high I.V.) polyesters significantly reduced their I.V.

By utilizing the solid state polymerization process of this invention this problem of polymer degradation can be eliminated since high molecular weight resins are not required as prepolymers. The melt blending of very viscous polymers also requires expensive equipment and consumes large amounts of energy.  In addition to this, it is often very difficult to control the temperature in the blending of high viscosity polymers.  All of these problems are eliminated by practicing the present invention.

Variations in the present invention are possible in light of the description of it provided herein.  It is, therefore, to be understood that changes can be made in the particular embodiments described which will be within the full intended scope of the invention as defined by the following appended claims.

WHAT IS CLAIMED IS:

1. A process for the preparation of a high molecular weight resin characterized by solid state polymerizing a mixture of from about 5 to about 75 mole percent of a polyethylene terephthalate prepolymer and from about 25 to about 95 mole percent of a polyethylene isophthalate prepolymer at an elevated temperature to produce said high molecular weight resin, wherein said high molecular weight resin has an oxygen permeability of 0.8 cc-mil/100 in$^2$/day-atm or less and an intrinsic viscosity of 0.65 dl/g or greater.

2. A process as specified in claim 1 characterized in that said mixture is comprised of from 10 to 65 mole percent polyethylene isophthalate prepolymer and from 35 to 90 mole percent polyethylene terephthalate prepolymer and in that said elevated temperature is from about 1°C to about 50°C below the sticking temperature of said mixture.

3. A process as specified in claim 2 characterized in that said mixture of polyethylene terephthalate prepolymer and polyethylene isophthalate prepolymer is prepared by melt blending prior to said solid state polymerization.

4. A process as specified in claim 3 characterized in that said mixture has an initial I.V. of at least 0.3 dl/g.

5. A process as specified in claim 4 characterized in that said elevated temperature is from about 5°C to about 20°C below the sticking temperature of said mixture.

6. A process as specified in claim 4 characterized in that said elevated temperature is from about 200°C to about 235°C.

7. A process as specified in claim 6 characterized in that said high molecular weight resin has an oxygen permeability of no more than 7 cc-mil/100 $in^2$/day-atm and in that said mixture has an initial I.V. of 0.45 to 0.7 dl/g.

8. A process as specified in claim 7 characterized in that said high molecular weight resin has an oxygen permeability of no more than 6 cc-mil/100 $in^2$/day-atm and in that said high molecular weight resin has an I.V. of at least 0.7 dl/g.

9. A process as specified in claim 8 characterized in that said mixture is comprised of from 15 to 25 mole percent polyethylene isophthalate prepolymer and from 75 to 85 mole percent polyethylene terephthalate prepolymer.

10. A process as specified in claim 8 characterized in that said mixture is comprised of from 25 to 55 mole percent polyethylene isophthalate prepolymer and from 45 to 75 mole percent polyethylene terephthalate prepolymer.